# EUROPÄISCHE PATENTSCHRIFT

(11) **EP 0 621 808 B1**
(45) Veröffentlichungstag und Bekanntmachung des Hinweises auf die Patenterteilung: **16.08.1995**
(21) Anmeldenummer: 93902212.5
(22) Anmeldetag: 15.01.1993
(51) Int. Cl.: B05D 7/00, C09D 143/04

(54) **VERFAHREN ZUR HERSTELLUNG EINER MEHRSCHICHTIGEN LACKIERUNG, NICHT-WÄSSRIGE LACKE UND SELBSTVERNETZBARE POLYACRYLATHARZE**
PROCESS FOR PRODUCING A MULTI-LAYER PAINT, NON-AQUEOUS PAINTS AND SELF-CROSSLINKABLE POLYACRYLATE RESINS
PROCEDE DE FABRICATION D'UN REVETEMENT DE VERNIS MULTICOUCHE, VERNIS NON AQUEUX ET RESINES DE POLYACRYLATE AUTORETICULABLES

(30) Priorität: 23.01.1992 DE 4201724
(43) Veröffentlichungstag der Anmeldung: 02.11.1994
(73) Patentinhaber: BASF Lacke + Farben Aktiengesellschaft, 48136 Münster (DE)
(72) Erfinder: RÖCKRATH, Ulrike, D-4370 Marl (DE); BETZ, Peter, Totsuka-ku, Yokohama 244 (JP); POTH, Ulrich, D-4400 Münster (DE); WIGGER, Georg, D-4400 Münster (DE)
(86) Internationale Anmeldenummer: EP9300088
(87) Internationale Veröffentlichungsnummer: WO9314882

(56) Entgegenhaltungen:
- EP-A- 0 159 894
- DE-A- 3 838 748
- DE-A- 4 008 343
- DE-A- 4 131 089
- GB-A- 2 234 691
- US-A- 3 953 644

## Beschreibung

Die Erfindung betrifft ein selbstvernetzbares Polyacrylatharz, das hergestellt wird, indem ein Gemisch aus
(a) einem Ester der Acrylsäure oder Methacrylsäure oder einer Mischung aus Estern der Acrylsäure und/oder Methacrylsäure,
(b) einer olefinisch ungesättigten Epoxidverbindung oder einer Mischung aus olefinisch ungesättigten Epoxidverbindungen,
(c) einem olefinisch ungesättigten Säureanhydrid oder einer Mischung aus olefinisch ungesättigten Säureanhydriden und
(d) einer olefinisch ungesättigten Verbindung, die mindestens eine Tri-, Di- oder Monoalkoxysilangruppe im Molekül enthält sowie
(e) einer weiteren, von (a), (b), (c) und (d) verschiedenen olefinisch ungesättigten Verbindung oder einer Mischung aus solchen ungesättigten Verbindungen polymerisiert wird.

Die Erfindung betrifft auch einen nicht-wäßrigen Lack und ein Verfahren zur Herstellung einer mehrschichtigen Lackierung, bei dem
(1) ein pigmentierter Basislack auf die Substratoberfläche aufgebracht wird
(2) aus dem in Stufe (1) aufgebrachten Basislack ein Polymerfilm gebildet wird
(3) auf der so erhaltenen Basislackschicht ein nicht-wäßriger transparenter Decklack aufgebracht wird und anschließend
(4) Basislackschicht und Decklackschicht zusammen eingebrannt werden.

Das oben beschriebene "basecoat/clearcoat"-Verfahren ist bekannt und wird vor allem zur Herstellung von Decklackierungen, insbesondere Metalleffektlackierun gen auf Automobilkarosserien eingesetzt (vgl. z.B. US-A-3,639,147 und EP-A-38 127).

In Stufe (3) des oben beschriebenen Verfahrens werden üblicherweise nicht-wäßrige transparente Decklacke eingesetzt, die ein hydroxylgruppenhaltiges Harz und ein Polyisocyanat oder ein Aminoplastharz als Vernetzungsmittel enthalten. Polyisocyanat enthaltende transparente Decklacke müssen entweder in Form von Zweikomponentenlacken oder unter Verwendung von blockierten Polyisocyanaten eingesetzt werden. Der Einsatz von Zweikomponentenlacken ist aufwendig, und transparente Decklackierungen, die unter Verwendung von blockierten Polyisocyanaten hergestellt worden sind, neigen zur Vergilbung.
Aminoplast enthaltende Decklacke zeigen eine unzureichende Beständigkeit gegen Säuren und spalten beim Einbrennen Formaldehyd ab.

Die der vorliegenden Erfindung zugrundeliegende Aufgabenstellung besteht in der Bereitstellung von nichtwäßrigen transparenten Decklacken, die die oben beschriebenen Nachteile des Standes der Technik nicht aufweisen. Die neuen Decklacke sollen außerdem auch dann, wenn sie mit einem hohen Gehalt an unter Applikationsbedingungen nichtflüchtigen Anteilen (d.h. mit einem niedrigen Gehalt an organischen Lösemitteln) appliziert werden, Lackierungen mit befriedigenden Eigenschaften liefern.

Diese Aufgabe wird überraschenderweise gelöst, indem in Stufe (3) des oben beschriebenen Verfahrens ein nicht-wäßriger transparenter Decklack eingesetzt wird, der
(A) als Bindemittel ein selbstvernetzbares Polyacrylatharz, das herstellbar ist, indem ein Gemisch aus
   (a) einem Ester der Acrylsäure oder Methacrylsäure oder einer Mischung aus Estern der Acrylsäure und/oder Methacrylsäure,
   (b) einer olefinisch ungesättigten Epoxidverbindung oder einer Mischung aus olefinisch ungesättigten Epoxidverbindungen,
   (c) einem olefinisch ungesättigten Säureanhydrid oder einer Mischung aus olefinisch ungesättigten Säureanhydriden und
   (d) einer olefinisch ungesättigten Verbindung, die mindestens eine Tri-, Di- oder Monoalkoxysilangruppe im Molekül enthält sowie
   (e) einer weiteren, von (a), (b), (c) und (d) verschiedenen olefinisch ungesättigten Verbindung oder einer Mischung aus solchen ungesättigten Verbindungen,
   polymerisiert wird und das dadurch gekennzeichnet ist, daß es hergestellt wird, indem ein Gemisch aus
   0,5 bis 65 Gew.% der Komponente (a), 14 bis 70 Gew.% der Komponente (b), 10 bis 50 Gew.% der Komponente (c), 10 bis 50 Gew.% der Komponente (d) und 0 bis 50 Gew.% der Komponente (e),
   wobei die Summe der Gewichtsprozentangaben für die Komponenten (a) bis (e) 100 Gew.% ergibt, zu einem selbstvernetzbaren Polyacrylatharz, das im statistischen Mittel pro Molekül mindestens eine Epoxidgruppe, mindestens eine Säureanhydridgruppe und mindestens 0,2 Tri-, Di- oder Monoalkoxysilangruppen enthält, polymerisiert wird, oder eine Mischung aus solchen selbstvernetzbaren Polyacrylatharzen und
(B) mindestens eine Säure und/oder mindestens eine Base als Vernetzungskatalysator
enthält.

In der DE-A-40 08 343 werden transparente Decklacke beschrieben, die Polyacrylatharze enthalten, die im statistischen Mittel pro Molekül mindestens eine Epoxidgruppe und mindestens eine Silanol- und/oder mindestens eine direkt an ein Siliciumatom gebundene hydrolysierbare Gruppe enthalten. Die in der DE-A-40 08 343 beschriebenen Lacke enthalten neben den Polyacrylatharzen noch mindestens ein Vernetzungsmittel. Als einsetzbare Vernetzungsmittel werden Polyisocyanatverbindungen, Aminoplastharze und Carbonsäureverbindungen, wie z.B. ein Harz oder eine Verbindung mit durchschnittlich mindestens zwei Carboxylgruppen im Molekül oder ein Harz oder eine Verbindung mit durchschnittlich mindestens einer Carbonsäureanhydridgruppe im Molekül genannt. Die in der DE-A-40 08 343 beschriebenen Decklacke haben den Nachteil, daß es in vielen Fällen zu Unverträglichkeiten zwischen den Polyacrylatharzen und den Vernetzungsmitteln kommt, was zu Verschlechtetungen der Lagerstabilitäten und der optischen Eigenschaften der Lackfilme führt.

In der GB-A-2 234 691 wird ein "basecoat/clearcoat" -Verfahren beschrieben, bei dem transparente Decklacke eingesetzt werden, die einen Vernetzungskatalysator und ein Harz, das Epoxidgruppen und direkt an ein Siliziumatom gebundene Hydroxyl- und/oder hydrolysierbare Gruppen im Molekül enthält, oder eine Mischung aus einem Harz, das direkt an ein Siliziumatom gebundene Hydroxyl- und/oder hydrolysierbare Gruppen enthält, und einem Harz, das Epoxidgruppen enthält, als Bindemittel enthalten.

Die EP-A-159 894 offenbart nicht-wäßrige Lacke, die als Bindemittel Copolymere aus
40 bis 80 Gew.% eines Esters der Acryl- oder Methacrylsäure mit 1 bis 12 Kohlenstoffatomen im Alkoholrest,
5 bis 20 Gew.% eines Hydroxyl- oder Epoxidgruppen enthaltenden Esters der Acryl- oder Methacrylsäure,
0,01 bis bis 20 Gew.% eines Vinylgruppen enthaltenden Polysiloxans,
2 bis 20 Gew% eines Vinylgruppen enthaltenden Silans und
0,1 bis 5 Gew.% Maleinsäureanhydrid
enthalten.

Die erfindungsgemäßen Decklacke zeichnen sich durch hohe Lagerstabilität aus. Sie liefern Decklackierungen, die eine gute Kratzfestigkeit (scratch resistance), gute Beständigkeiten gegen Säuren und organische Lösemittel sowie hohen Glanz, gute DOI-Werte und einen guten Verlauf zeigen. Diese guten Eigenschaften bleiben auch erhalten, wenn die Lacke mit einem niedrigen Gehalt an organischen Lösemitteln (weniger als 50 Gew.-%) appliziert werden. Die erfindungsgemäßen transparenten Decklacke weisen vorzugsweise einen Feststoffgehalt von mindestens 50 Gew.-% (1 h, 130°C) auf.

Das in den erfindungsgemäß eingesetzten Lacken als Bindemittel enthaltene selbstvernetzbare Polyacrylatharz (A) enthält im statistischen Mittel pro Molekül mindestens eine Epoxidgruppe, vorzugsweise 1,0 bis 5,0, besonders bevorzugt 1,0 bis 3,0, ganz besonders bevorzugt 1,0 bis 1,8 Epoxidgruppen, mindestens eine Säureanhydridgruppe, vorzugsweise 1,0 bis 5,0, besonders bevorzugt 1,0 bis 3,0, ganz besonders bevorzugt 1,0 bis 1,8 Säureanhydridgruppen und mindestens 0,2 Tri-, Di- oder Monoalkoxysilangruppen, vorzugsweise 0,2 bis 2,0, besonders bevorzugt 0,3 bis 1,6, ganz besonders bevorzugt 0,4 bis 1,0 Tri-, Di- oder Monoalkoxysilangruppen. Es kann auch eine Mischung aus solchen Polyacrylatharzen als Bindemittel in den erfindungsgemäß eingesetzten Lacken eingesetzt werden.

Es ist bevorzugt, daß das Polyacrylatharz (A) neben Epoxidgruppen, Säureanhydridgruppen und Tri-, Di- oder Monoalkoxysilangruppen keine bzw. nur geringe z.B. auf Verunreinigungen zurückzuführende Mengen an weiteren funktionellen Gruppen, insbesondere Hydroxylgruppen enthält.

Das selbstvernetzbare Polyacrylatharz (A) weist ein zahlenmittleres Molekulargewicht von 1000 bis 50000, vorzugsweise 1000 bis 5000, besonders bevorzugt 1000 bis 3000 auf (Bestimmung: gelpermeationschromatographisch mit Polystyrolstandard).

Das selbstvernetzbare Polyacrylatharz (A) ist herstellbar, indem ein Gemisch aus
(a) einem Ester der Acrylsäure oder Methacrylsäure oder einer Mischung aus Estern der Acrylsäure und/oder Methacrylsäure
(b) einer olefinisch ungesättigten Epoxidverbindung oder einer Mischung aus olefinisch ungesättigten Epoxidverbindungen
(c) einem olefinisch ungesättigtem Säureanhydrid oder einer Mischung aus olefinisch ungesättigten Säureanhydriden und
(d) einer olefinisch ungesättigten Verbindung, die mindestens eine Tri-, Di- oder Monoalkoxysilangruppe im Molekül enthält sowie gegebenenfalls
(e) einer weiteren, von (a), (b), (c) und (d) verschiedenen olefinisch ungesättigten Verbindung oder einer Mischung aus solchen ungesättigten Verbindungen
polymerisiert wird. Die Komponenten (b), (c) und (d) müssen in dem Gemisch in einer solchen Menge vorhanden sein, daß das nach der Polymerisation des Gemisches erhaltene selbstvernetzbare Polyacrylatharz (A) im statistischen Mittel pro Molekül mindestens eine Epoxidgruppe, vorzugsweise 1,0 bis 5,0, besonders bevorzugt 1,0 bis 3,0, ganz besonders bevorzugt 1,0 bis 1,8 Epoxidgruppen, mindestens eine Säureanhydridgruppe, vorzugsweise 1,0 bis 5,0, besonders bevorzugt 1,0 bis 3,0, ganz besonders bevorzugt 1,0 bis 1,8 Säureanhydridgruppen und mindestens 0,2 Tri-, Di- oder Monoalkoxysilangruppen, vorzugsweise 0,2 bis 2,0, besonders bevorzugt 0,3 bis 1,6, ganz besonders bevorzugt 0,4 bis 1,0 Tri-, Di- oder Monoalkoxysilangruppen enthält.
Im allgemeinen werden die erfindungsgemäßen selbstvernetzbaren Polyacrylatharze durch Polymerisation von Mischungen erhalten, die 0,5 bis 65, vorzugsweise 10 bis 65, besonders bevorzugt 35 bis 65 Gew.-% der Komponente (a), 14 bis 70, vorzugsweise 14 bis 40, besonders bevorzugt 14 bis 25 Gew.-% der Komponente (b), 10 bis 50, vorzugsweise 10 bis 30, besonders bevorzugt 10 bis 17,5 Gew.-% der Komponente (c), 10 bis 50, vorzugsweise 10 bis 40, besonders bevorzugt 10 bis 25 Gew.-% der Komponente (d) sowie 0 bis 50, vorzugsweise 0 bis 20, besonders bevorzugt 5 bis 10 Gew.-% der Komponente (e) enthalten, wobei die Summe der Gewichtsprozentangaben für die Komponenten (a) bis (e) 100 Gew.-% ergibt. Dabei ist weiterhin zu berücksichtigen, daß die Anteile der einzelnen Komponenten in dem der Copolymerisation zuzuführenden Gemisch so bemessen werden, daß in den erhaltenen Polyacrylatharzen die obengenannten Mengen an Epoxid-, Säureanhydrid- und Tri-, Di- oder Monoalkoxysilangruppen enthalten sind. Der Gehalt der Polyacrylatharze an diesen Gruppierungen entspricht dem Gehalt der Mischung aus den Komponenten (a) bis (e) an den gleichen Gruppen, da davon ausgegangen werden kann, daß die Polyacrylatharze bezüglich ihrer chemischen Zusammensetzung der chemischen Zusammensetzung der Mischung aus den Komponenten (a) bis (e) entsprechen.

Die Polymerisation kann nach üblichen radikalischen Polymerisationsverfahren durchgeführt werden, wie beispielsweise Masse- oder Lösungspolymerisation. Dabei werden die Monomeren bei erhöhten Temperaturen, vorzugsweise bei 60 bis 160°C, besonders bevorzugt bei 80 bis 145°C in Gegenwart von Radikalbildnern und gegebenenfalls Molekulargewichtsreglern copolymerisiert. Die Polymerisation wird vorzugsweise in inerten Lösemitteln durchgeführt. Geeignete Lösemittel sind beispielsweise Aromaten, wie Benzol, Toluol; Ester, wie Ethylacetat, Butylacetat, Hexylacetat, Heptylacetat, Methylglykolacetat, Ethylglykolacetat, Methoxypropylacetat; Ether, wie Tetrahydrofuran, Dioxan, Diethylenglykoldimethylether und Ketone, wie Aceton, Methylethylketon, Methylisobutylketon, Methyl-n-amylketon und Methylisoamylketon. Selbstverständlich können auch Mischungen aus diesen Lösemitteln eingesetzt werden.

Im allgemeinen erfolgt die Polymerisation unter Atmosphärendruck, sie kann jedoch auch bei erhöhten Drücken bis zu 20 bar durchgeführt werden. Die Initiatoren werden im allgemeinen in Mengen von 0,05 bis 15 Gew.-%, vorzugsweise 0,1 bis 10 Gew.-%, bezogen auf die Gesamtmenge der Monomeren, eingesetzt. Geeignete Initiatoren sind übliche Radikalstarter, wie z.B. aliphatische Azoverbindungen, wie Azodiisobuttersäurenitril, Azo-bis-2-methylvaleronitril, 1,1'-Azo-bis-1-cyclohexannitril und 2,s'-Azo-bis-isobuttersäurealkylester; symmetrische Diacylperoxide, z.B. Acetyl-, Propionyl- oder Butyrylperoxid, mit Brom-, Nitro-, Methyl- oder Methoxygruppen substituierte Benzoylperoxide, Laurylperoxide; symmetrische Peroxidicarbonate, z.B. Diethyl-, Diisopropyl-, Dicyclohexyl sowie Benzoylperoxidicarbonat, tert.-Butylperoxy-2-ethylhexanoat, tert. Butylperbenzoat oder tert.-Butylphenylperacetat sowie Peroxycarbonate, wie z.B. tert.-Butyl-N-(phenylperoxy)-carbonat oder tert.-Butyl-N-(2-, 3- oder 4-chlorphenylperoxy)-carbonat; Hydroperoxide, wie beispielsweise tert.-Butylhydroperoxid, Cumolhydroperoxid; Dialkylperoxide, wie Di-cumylperoxid; tert.-Butyl-cumylperoxid oder Di-tert.-butylperoxid.

Zur Regelung des Molekulargewichts der Copolymerisate können übliche Regler bei der Herstellung eingesetzt werden. Beispielhaft genannt seien tert.-Dodecylmercaptan, n-Dodecylmercaptan oder Diisopropylxanthogendisulfid. Die Regler können in Mengen von bis zu 10 Gew.-%, vorzugsweise 0,5 bis 5 Gew.-%, bezogen auf die Gesamtmenge der Monomeren, zugegeben werden. Die bei der Copolymerisationsreaktion anfallenden Lösungen der selbstvernetzbaren Polyacrylatharze können dann ohne weitere Aufarbeitung der erfindungsgemäßen Verwendung zugeführt werden. Selbstverständlich ist es jedoch auch möglich, die Polyacrylatharze destillativ von gegebenenfalls noch vorliegenden Restmengen an nicht umgesetzten Monomeren und Lösungsmittel zu befreien und die als Destillationsrückstand vorliegenden Polyacrylatharze der erfindungsgemäßen Verwendung zuzuführen.

Als Komponente (a) können im Prinzip alle copolymerisierbaren Ester der Acrylsäure oder Methacrylsäure oder Mischungen aus Estern der Acrylsäure und/oder Methacrylsäure eingesetzt werden. Als Beispiele werden genannt: Alkylacrylate und Alkylmethacrylate mit 1 bis 12 C-Atomen im Alkylrest, wie z.B. Methyl-, Ethyl-, Propyl-, n-Butyl-, Isobutyl-, tert. Butyl-, Pentyl-, Hexyl-, Heptyl-, 2-Ethylhexyl- und Laurylacrylat bzw. -methacrylat; cycloalkylacrylate und Cycloalkylmethacrylate, wie z.B. Cyclohexylacrylat und Cyclohexylmethacrylat und hydroxyfunktionelle Ester der Acrylsäure oder Methacrylsäure, wie z.B. Hydroxyethyl-, Hydroxypropyl- und Hydroxybutylacrylat bzw. -methacrylat. Es ist bevorzugt, als Komponente (a) ausschließlich solche Monomere einzusetzen, die keine funktionellen Gruppen, wie z.B. Hydroxylgruppen, enthalten.

Als Komponente (b) können im Prinzip alle copolymerisierbaren olefinisch ungesättigten Epoxidverbindungen, die mindestens eine Epoxidgruppe im Molekül enthalten oder Mischungen aus solchen Epoxidverbindungen eingesetzt werden. Als Beispiele werden genannt: Glycidylacrylat und Glycidylmethacrylat. Weitere Beispiele für einsetzbare Epoxidverbindungen finden sich in der DE-A-40 08 343 auf den Seiten 26 bis 35. Glycidylacrylat und Glycidylmethacrylat werden bevorzugt eingesetzt.

Als Komponente (c) können im Prinzip alle copolymerisierbaren olefinisch ungesättigten Säureanhydride oder Mischungen aus copolymerisierbaren olefinisch ungesättigten Säureanhydriden eingesetzt werden, wobei hier unter dem Begriff "Säureanhydrid" Verbindungen verstanden werden, die mindestens eine intramolekulare Carbonsäureanhydridgruppe im Molekül enthalten. Als Beispiele werden Itaconsäureanhydrid und Maleinsäureanhydrid genannt, wobei Maleinsäureanhydrid bevorzugt ist.
Als Komponente (d) können im Prinzip alle copolymerisierbaren olefinisch ungesättigten Verbindungen, die mindestens eine Tri-, Di- oder Monoalkoxysilangruppe im Molekül enthalten oder Mischungen aus solchen Verbindungen eingesetzt werden. Als Beispiele werden genannt:
γ-(Meth)acryloxypropyltrimethoxysilan,
γ-(Meth)acryloxypropyltriethoxysilan,
γ-(Meth)acryloxypropyltripropoxysilan,
γ-(Meth)acryloxypropylmethyldimethoxysilan,
γ-(Meth)acryloxypropylmethyldiethoxysilan,
γ-(Meth)acryloxypropylmethyldipropoxysilan,
γ-(Meth)acryloxybutylphenyldimethoxysilan,
γ-(Meth)acryloxybutylphenyldiethoxysilan,
γ-(Meth)acryloxybutylphenyldipropoxysilan,
γ-(Meth)acryloxypropyldimethylmethoxysilan,
γ-(Meth)acryloxypropyldimethylethoxysilan,
γ-(Meth)acryloxypropylphenylmethylmethoxysilan,
γ-(Meth)acryloxypropylphenylmethylethoxysilan,
Weitere Beispiele für Verbindungen, die als Komponente (d) einsetzbar sind, sind in der DE-A-40 08 343 auf den Seiten 35 (ab Zeile 49) bis 41 zu finden.

Als Komponente (e) kann im Prinzip jede von den Komponenten (a), (b), (c) und (d) verschiedene copolymerisierbare Verbindung oder eine Mischung aus solchen Verbindungen eingesetzt werden. Als Beispiele werden genannt: Vinylaromaten, wie beispielsweise Styrol, Vinyltoluol, α-Methylstyrol, α-Ethylstyrol, kernsubstituierte Diethylstyrole, Isopropylstyrol, Butylstyrole und Methoxystyrole; Vinylether, wie beispielsweise Ethylvinylether, n-Propylvinylether, Isopropylvinylether, n-Butylvinylether und Isobutylvinylether und Vinylester, wie beispielsweise Vinylacetat, Vinylpropionat und Vinylbutyrat.

Die erfindungsgemäßen Polyacrylatharze (A) sind auch herstellbar, indem funktionelle Gruppen enthaltende Polyacrylatharze mit niedermolekularen Verbindungen, die sowohl eine mit den funktionellen Gruppen des Polyacrylatharzes reaktive Gruppe als auch eine Epoxid-, Säureanhydrid- bzw. Tri-, Di- oder Monoalkoxysilangruppe enthalten, umgesetzt werden (vgl. dazu DE-A-40 08 343 Seite 4 bis Seite 25).

Unter Verwendung der oben beschriebenen selbstvernetzbaren Polyacrylatharze können nach allgemein gut bekannten Methoden nicht-wäßrige transparente Decklacke hergestellt werden. Als Lösemittel können alle für die Lackherstellung verwendbaren organischen Lösemittel eingesetzt werden, mit Ausnahme von Lösemitteln, die mit Epoxidgruppen, Säureanhydridgruppen oder Alkoxysilangruppen reaktive Gruppen enthalten. Die Decklacke enthalten keine oder nur transparente Pigmente.

Neben den erfindungsgemäß eingesetzten Polyacrylatharzen müssen die Decklacke auch noch mindestens (B) eine Säure und/oder Base als Vernetzungskatalysator enthalten. Geeignete Vernetzungskatalysatoren sind beispielsweise tertiäre Amine, wie Ethyldimethylamin, Diethylmethylamin, Triethylamin, Ethlydiisopropylamin, Tributylamin, 1-Methylpyrrolidin, 1-Methylpiperidin, 1,4-Dimethylpiperazin, 1,4-Diazabicyclo(2,2,2)octan oder 1,8-Diazabicyclo(5,4,0)undec-7-en, N,N-Dimethylethanolamin, N,N-Diethylpropanolamin, N,N-Dibutylethanolamin, 1-Amino-3-(dimethylamino)propan oder 1-Amino-2-(diethylamino)-ethan, quartäre Ammoniumsalze, Aldimine, Ketimine, Brönsted-Säuren, wie p-Toluolsulfonsäure, Maleinsäure und Salicylsäure sowie Lewis-Säuren, wie z.B. Dibutylzinndilaurat. Selbstverständlich können auch Mischungen aus Vernetzungskatalysatoren eingesetzt werden.

Die erfindungsgemäßen transparenten Decklacke enthalten üblicherweise 0,1 bis 3,0, vorzugsweise 0,5 bis 2,0, besonders bevorzugt 1,0 bis 1,5 Gew.-% des Vernetzungskatalysators bzw. des Gemisches aus Vernetzungskatalysatoren, wobei die Gewichtsprozentangaben auf das Gewicht des im Lack enthaltenen Polyacrylatharzes (A) (= 100 Gew.-%) bezogen sind.

Die erfindungsgemäßen transparenten Decklacke können neben dem selbstvernetzbaren Polyacrylatharz (A) und dem Vernetzungskatalysator (B) noch weitere Bindemittelbestandteile, wie z.B. Aminoplastharze, insbesondere Melaminharze, blockierte Polyisocyanate, Polyesterharze, Alkydharze, Polyurethanharze und Lichtschutzmittel enthalten.

In Stufe (1) des oben beschriebenen "basecoat/clearcoat"-Verfahrens können im Prinzip alle zur Herstellung von mehrschichtigen Lackierungen geeigneten pigmentierten Basislacke eingesetzt werden. Derartige Basislacke sind dem Fachmann gut bekannt. Es können sowohl wasserverdünnbare Basislacke als auch Basislacke auf Basis von organischen Lösemitteln eingesetzt werden. Geeignete Basislacke werden beispielsweise beschrieben in der US-A-3,639,147, DE-A-33 33 072, DE-A-38 14 853, GB-A-2 012 191, US-A-3,953,644, EP-A-260 447, DE-A-39 03 804, EP-A-320 552, DE-A-36 28 124, US-A-4,719,132, EP-A-297 576, EP-A-69 936, EP-A-89 497, EP-A-195 931, EP-A-228 003, EP-A-38 127 und DE-A-28 18 100.

In Stufe (2) des Verfahrens werden dem in Stufe (1) applizierten Basislack in einer Abdunstphase die Lösemittel bzw. das Wasser entzogen. Die Basislackschicht kann auch eingebrannt werden. Das ist aber aus ökonomischen Gründen nachteilig, weil dann zur Herstellung der Mehrschichtlackierung zwei anstelle von einem Einbrennvorgang benötigt werden.

Die erfindungsgemäßen transparenten Decklacke werden vorzugsweise zur Herstellung von Mehrschichtlackierungen auf Automobilkarosserien, insbesondere zur Herstellung von Metalleffektlackierungen des "basecoat/clearcoat"-Typs eingesetzt. Sie können sowohl zur Erstlackierung als auch zur Reparaturlackierung eingesetzt werden. Die Lacke können aber auch zur Lackierung von gegebenenfalls vorbehandelten Substraten, wie Holz, Glas, Keramik, Stein, Beton, Kunststoffe, Textilien, Leder, Pappe und Papier eingesetzt werden. Die erfindungsgemäßen Lacke können durch Spritzen, Streichen, Tauchen, Fluten, Gießen und Walzen, vorzugsweise durch Spritzen auf das zu lackierende Substrat aufgebracht werden.

Die oben beschriebenen Polyacrylatharze (A) können auch zur Herstellung von pigmentierten Lacken eingesetzt werden. Auch die mit diesen Lacken hergestellten Lackierungen zeichnen sich durch gute Eigenschaften aus.

Die erfindungsgemäßen Lacke können je nach Art und Menge der eingesetzten Katalysatoren bei Temperaturen von Raumtemperatur bis 200°C ausgehärtet werden.

Die Erfindung wird in den folgenden Beispielen näher erläutert. Alle Mengen- und Prozentangaben sind, wenn nicht ausdrücklich etwas anderes festgestellt wird, als Gewichtsangaben zu verstehen.

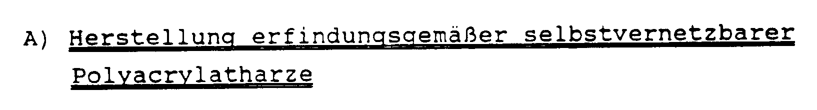

### Polyacrylatharzlösung 1

In einem Stahlkessel ausgestattet mit Monomerzulauf, Initiatorzulauf, Thermometer, Ölheizung und Rückflußkühler werden 727,2 Teile Solventnaphtha und 120 Teile Methacryloxypropyltrimethoxysilan (Silan GF 31, Hersteller: Wacker) vorgelegt, vermischt und auf 140°C aufgeheizt. Dann wird eine Mischung α aus 72 Teilen Solventnaphta und 72 Teilen t-Butylperisononanoat in einer solchen Geschwindigkeit unter Rühren zugegeben, daß die Zugabe der Mischung α nach 4 h 45 min abgeschlossen ist. 15 Minuten nach Beginn der Zugabe der Mischung α wird eine Mischung β bestehend aus 276 Teilen n-Butylacrylat, 276 Teilen t-Butylacrylat, 120 Teilen Styrol, 240 Teilen Glycidylmethacrylat und 168 Teilen Maleinsäureanhydrid in einer solchen Geschwindigkeit zu der Reaktionsmischung gegeben, daß die Zugabe der Mischung β nach 4 h abgeschlossen ist. Nach Abschluß der Zugabe der Mischung α wird das Reaktionsgemisch noch 2 h auf 140°C gehalten und anschließend auf Raumtemperatur abgekühlt.

Die erhaltene Acrylatharzlösung weist einen Feststoffgehalt von 60 % (1 h, 130°C) auf.

### Polyacrylatharzlösung 2

In einem Stahlkessel ausgestattet mit Monomerzulauf, Initiatorzulauf, Thermometer, ölheizung und Rückflußkühler werden 727,2 Teile Solventnaphta vorgelegt und auf 140°C aufgeheizt. Dann wird eine Mischung α aus 72 Teilen Solventnaphta und 72 Teilen t-Butylperisononanoat in einer solchen Geschwindigkeit unter Rühren zugegeben, daß die Zugabe der Mischung α nach 4 h 45 min abgeschlossen ist. 15 Minuten nach Beginn der Zugabe der Mischung α wird eine Mischung β bestehend aus 276 Teilen n-Butylacrylat, 276 Teilen t-Butylacrylat, 120 Teilen Cyclohexylmethacrylat, 240 Teilen Glycidylmethacrylat, 168 Teilen Maleinsäureanhydrid und 120 Teilen Methacryloxypropyltrimethoxysilan in einer solchen Geschwindigkeit zu der Reaktionsmischung gegeben, daß die Zugabe der Mischung β nach 4 h abgeschlossen ist. Nach Ahschluß der Zugabe der Mischung α wird das Reaktionsgemisch noch 2 h auf 140°C gehalten und anschließend auf Raumtemperatur abgekühlt. Die erhaltene Acrylatharzlösung weist einen Feststoffgehalt von 60 % (1 h, 130°C) auf.

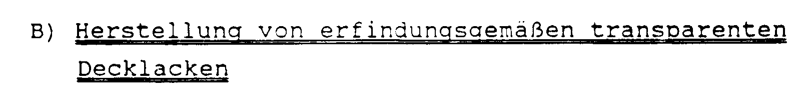

Eine Lösung von 1,5 Teilen p-Toluolsulfonsäuremonohydrat in 8,9 Teilen Butanol wird vorgelegt und unter Rühren mit 80 Teilen der oben beschriebenen Polyacrylatharzlösung 1 bzw. 80 Teilen der oben beschriebenen Polyacrylatharzlösung 2, 1,4 Teilen Tinuvin® 1130 (Ciba Geigy AG), 1,0 Teilen Tinuvin® 440 (Ciba Geigy AG) sowie 1,0 Teilen einer handelsüblichen 1 %igen Lösung eines Siliconöles (Verlaufshilfsmittel) versetzt. Nachdem die Komponenten gut durchmischt worden sind, werden 6,2 Teile einer handelsüblichen 98 %igen Lösung eines methanolveretherten Melaminharzes (Cymel® 301, Hersteller: Dyno Cyanamid) zugegeben. Die so erhaltenen transparenten Decklacke haben einen Feststoffgehalt von 54 % (1 h, 130°C) und weisen eine gute Lagerstabilität auf.

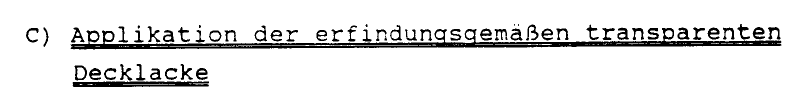

Auf mit einem handelsüblichen Elektrotauchlack und einem handelsüblichen Füller lackierte Stahlbleche wird ein handelsüblicher nicht-wäßriger aluminiumpigmenthaltiger Basislack aufgespritzt, 5 Minuten bei Raumtemperatur getrocknet und dann mit den gemäß Punkt B) hergestellten erfindungsgemäßen transparenten Decklacken überlackiert (Trockenfilmdicke 40 - 45 »m). Nach einer weiteren Trockenzeit von 5 Minuten bei Raumtemperatur werden die Basislack- und Decklackschicht 20 Minuten lang bei 140°C im Umluftofen zusammen eingebrannt. Die so erhaltenen Lackierungen zeichnen sich durch guten Verlauf, gute Beständigkeit gegen organische Lösemittel (mit einem mit Methylisobutylketon getränkten Wattebausch müssen 100 Doppelhübe durchgeführt werden bis Anlöseerscheinungen auf der Lackoberfläche sichtbar werden), gute Beständigkeit gegen Säuren sowie hohen Glanz aus und sie zeigen keine Neigung zur Vergilbung.

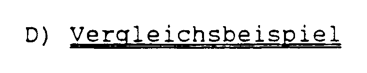

### Herstellung eines Polyacrylatharzes

In einem Stahlkessel ausgestattet mit Monomerzulauf, Initiatorzulauf, Thermometer, ölheizung und Rückflußkühler werden 727,2 Teile Solventnaphta vorgelegt und auf 140°C aufgeheizt. Dann wird eine Mischung α aus 72 Teilen Solventnaphta und 72 Teilen t-Butylperisononanoat in einer solchen Geschwindigkeit unter Rühren zugegeben, daß die Zugabe der Mischung α nach 4 h 45 min abgeschlossen ist. 15 Minuten nach Beginn der Zugabe der Mischung α wird eine Mischung β bestehend aus 336 Teilen n-Butylacrylat, 336 Teilen t-Butylacrylat, 120 Teilen Styrol, 240 Teilen Glycidylmethacrylat und 168 Teilen Maleinsäureanhydrid in einer solchen Geschwindigkeit zu der Reaktionsmischung gegeben, daß die Zugabe der Mischung β nach 4 h abgeschlossen ist. Nach Abschluß der Zugabe der Mischung α wird das Reaktionsgemisch noch 2 h auf 140°C gehalten und anschließend auf Raumtemperatur abgekühlt.

Die erhaltene Polyacrylatharzlösung weist einen Feststoffgehalt von 60 % (1 h, 130°C) auf.

### Herstellung und Applikation eines transparenten Decklackes

Es wird wie unter Punkt B) beschrieben verfahren, mit der einzigen Ausnahme, daß anstelle der Polyacrylatharzlösungen 1 bzw. 2 die nach der oben beschriebenen Vorschrift erhaltene Polyacrylatharzlösung eingesetzt wird. Der auf diese Art und Weise hergestellte Decklack wird wie unter Punkt C) beschrieben zur Herstellung einer mehrschichtigen Decklackierung eingesetzt. Im Gegensatz zu den mit den erfindungsgemäßen Decklacken erhaltenen Lackierungen weist diese Lackierung einen schlechten Verlauf, schlechte Beständigkeit gegen organische Lösemittel (es werden bereits nach 2 Doppelhüben mit einem mit Methylisobutylketon getränkten Wattebausch Anlöseerscheinungen auf der Lackoberfläche sichtbar) sowie einen schlechten Glanz auf.

## Patentansprüche

1. Selbstvernetzbares Polyacrylatharz, das hergestellt wird, indem ein Gemisch aus
(a) einem Ester der Acrylsäure oder Methacrylsäure oder einer Mischung aus Estern der Acrylsäure und/oder Methacrylsäure,
(b) einer olefinisch ungesättigten Epoxidverbindung oder einer Mischung aus olefinisch ungesättigten Epoxidverbindungen,
(c) einem olefinisch ungesättigten Säureanhydrid oder einer Mischung aus olefinisch ungesättigten Säureanhydriden und
(d) einer olefinisch ungesättigten Verbindung, die mindestens eine Tri-, Di- oder Monoalkoxysilangruppe im Molekül enthält sowie
(e) einer weiteren, von (a), (b), (c) und (d) verschiedenen olefinisch ungesättigten Verbindung oder einer Mischung aus solchen ungesättigten Verbindungen,
polymerisiert wird, dadurch gekennzeichnet, daß es hergestellt wird, indem ein Gemisch aus
0,5 bis 65 Gew.% der Komponente (a), 14 bis 70 Gew.% der Komponente (b), 10 bis 50 Gew.% der Komponente (c), 10 bis 50 Gew.% der Komponente (d) und 0 bis 50 Gew.% der Komponente (e),
wobei die Summe der Gewichtsprozentangaben für die Komponenten (a) bis (e) 100 Gew.% ergibt, zu einem selbstvernetzbaren Polyacrylatharz, das im statistischen Mittel pro Molekül mindestens eine Epoxidgruppe, mindestens eine Säureanhydridgruppe und mindestens 0,2 Tri-, Di- oder Monoalkoxysilangruppen enthält, polymerisiert wird.

2. Nicht-wäßriger Lack, dadurch gekennzeichnet, daß er
(A) als Bindemittel ein selbstvernetzbares Polyacrylatharz gemäß Anspruch 1 oder eine Mischung aus selbstvernetzbaren Polyacrylatharzen gemäß Anspruch 1 und
(B) als Vernetzungskatalysator mindestens eine Säure und/oder mindestens eine Base
enthält.

3. Polyacrylatharz oder Lack nach Anspruch 1 oder 2, dadurch gekennzeichnet, daß das selbstvernetzbare Polyacrylatharz hergestellt wird, indem ein Gemisch aus 10 bis 65 Gew.% der Komponente (a), 14 bis 40 Gew.% der Komponente (b), 10 bis 30 Gew.% der Komponente (c), 10 bis 40 Gew.% der Komponente (d) und 0 bis 20 Gew.% der Komponente (e) polymerisiert wird.

4. Polyacrylatharz oder Lack nach einem der Ansprüche 1 bis 3, dadurch gekennzeichnet, daß das selbstvernetzbare Polyacrylatharz ein zahlenmittleres Molekulargewicht von 1000 bis 50000, vorzugsweise 1000 bis 5000, besonders bevorzugt 1000 bis 3000 aufweist.

5. Lack nach einem der Ansprüche 2 bis 4, dadurch gekennzeichnet, daß er als Vernetzungskatalysator eine Lewis- oder Brönsted-Säure enthält.

6. Verfahren zur Herstellung einer mehrschichtigen Lackierung, bei dem
(1) ein pigmentierter Basislack auf die Substratoberfläche aufgebracht wird
(2) aus dem in Stufe (1) aufgebrachten Basislack ein Polymerfilm gebildet wird
(3) auf der so erhaltenen Basislackschicht ein nicht-wäßriger transparenter Decklack aufgebracht wird und anschließend
(4) Basislackschicht und Decklackschicht zusammen eingebrannt werden,
dadurch gekennzeichnet, daß der in Stufe (3) aufgebrachte nicht-wäßrige, transparente Decklack ein Lack gemäß einem der Ansprüche 2 bis 5 ist.

7. Verfahren nach Anspruch 6, dadurch gekennzeichnet, daß der Feststoffgehalt des in Stufe (3) aufgebrachten transparenten Decklackes mindestens 50 Gew. % beträgt.

## Claims

1. Autocrosslinkable polyacrylate resin which is prepared by polymerizing a mixture of
(a) an ester of acrylic acid or methacrylic acid or a mixture of eaters of acrylic acid and/or methacrylic acid,
(b) an olefinically unsaturated epoxide compound or a mixture of olefinically unsaturated epoxide compounds,
(c) an olefinically unsaturated acid anhydride or a mixture of olefinically unsaturated acid anhydrides,
(d) an olefinically unsaturated compound which contains at least one tri-, di- or monoalkoxysilane group per molecule, and
(e) a further olefinically unsaturated compound different from (a), (b), (c) and (d), or a mixture of such unsaturated compounds,
characterized in that it is prepared by polymerizing a mixture of
0.5 to 65% by weight of component (a), 14 to 70% by weight of component (b), 10 to 50% by weight of component (c), 10 to 50% by weight of component (d) and 0 to 50% by weight of component (e),
the sum of the weight percentages for components (a) to (e) being 100% by weight, to give an autocrosslinkable polyacrylate resin which contains on statistical average at least one epoxide group, at least one acid anhydride group and at least 0.2 tri-, di- or monoalkoxysilane groups per molecule.

2. Non-aqueous coating, characterized in that it contains
(A) as binder, an autocrosslinkable polyacrylate resin according to Claim 1 or a mixture of autocrosslinkable polyacrylate resins according to Claim 1, and
(B) as crosslinking catalyst at least one acid and/or at least one base.

3. Polyacrylate resin or coating according to Claim 1 or 2, characterized in that the autocrosslinkable polyacrylate resin is prepared by polymerizing a mixture of 10 to 65% by weight of component (a), 14 to 40% by weight of component (b), 10 to 30% by weight of component (c), 10 to 40% by weight of component (d) and 0 to 20% by weight of component (e).

4. Polyacrylate resin or coating according to one of Claims 1 to 3, characterized in that the autocrosslinkable polyacrylate resin has a number-average molecular weight of from 1000 to 50,000, preferably 1000 to 5000 and particularly preferably 1000 to 3000.

5. Coating according to one of Claims 2 to 4, characterized in that it contains a Lewis acid or Brönsted acid as crosslinking catalyst.

6. Process for the preparation of a multicoat finish, in which
(1) a pigmented basecoat is applied to the substrate surface,
(2) a polymer film is formed from the basecoat applied in step (1),
(3) a non-aqueous transparent topcoat is applied to the resulting basecoat layer, and subsequently
(4) the basecoat layer and topcoat layer are baked together,
characterized in that the non-aqueous transparent topcoat applied in step (3) is a coating according to one of Claims 2 to 5.

7. Process according to Claim 6, characterized in that the solids content of the transparent topcoat applied in step (3) is not less than 50% by weight.

## Revendications

1. Résine de polyacrylate autoréticulable, qui est préparée en ce que l'on polymérise un mélange
(a) d'un ester de l'acide acrylique ou de l'acide méthacrylique ou d'un mélange d'esters de l'acide acrylique et/ou de l'acide méthacrylique,
(b) d'un composé époxyde oléfiniquement insaturé ou d'un mélange de composés époxydes oléfiniquement insaturés,
(c) d'un anhydride d'acide oléfiniquement insaturé ou d'un mélange d'anhydrides d'acide oléfiniquement insaturés et
(d) d'un composé oléfiniquement insaturé, qui contient au moins un groupement tri-, di- ou monoalkoxysilanique dans la molécule ainsi que
(e) d'un autre composé oléfiniquement insaturé, différent de (a), de (b), de (c) et de (d), ou d'un mélange de composés insaturés de ce genre,
caractérisée en ce qu'elle est préparée en ce que l'on polymérise un mélange
de 0,5 à 65 % en poids du composant (a), de 14 à 70 % en poids du composant (b), de 10 à 50 % en poids du composant (c), de 10 à 50 % en poids du composant (d) et de 0 à 50 % en poids du composant (e), la somme des pourcentages en poids pour les composants (a) à (e) donnant 100 % en poids, pour former une résine de polyacrylate autoréticulable, qui contient en moyenne statistique par molécule au moins un groupement époxyde, au moins un groupement anhydride d'acide et au moins 0,2 groupement tri-, di- ou monoalkoxysilanique.

2. Laque non aqueuse, caractérisée en ce qu'elle contient
(A) en tant que liant une résine de polyacrylate autoréticulable conformément à la revendication 1, ou un mélange de résines de polyacrylate autoréticulables conformément à la revendication 1 et,
(B) en tant que catalyseur de réticulation au moins un acide et/ou au moins une base.

3. Résine de polyacrylate ou laque selon la revendication 1 ou 2, caractérisée en ce que la résine de polyacrylate autoréticulable est préparée en ce que l'on polymérise un mélange de 10 à 65 % en poids du composant (a), de 14 à 40 % en poids du composant (b), de 10 à 30 % en poids du composant (c), de 10 à 40 % en poids du composant (d) et de 0 à 20 % en poids du composant (e).

4. Résine de polyacrylate ou laque, selon l'une quelconque des revendications 1 à 3, caractérisée en ce que la résine de polyacrylate autoréticulable présente un poids moléculaire moyen au nombre de 1 000 à 50 000,
de préférence de 1 000 à 5 000, particulièrement de préférence de 1 000 à 3 000.

5. Laque selon l'une quelconque des revendications 2 à 4, caractérisée en ce qu'elle contient en tant que catalyseur de réticulation un acide de Lewis ou un acide de Brönsted.

6. Procédé de préparation d'un enduit de laque multicouche, lors duquel
(1) on applique sur la surface du substrat une laque de base pigmentée
(2) on forme, à partir de la laque de base appliquée dans l'étape (1), un film polymère
(3) on applique sur la couche de laque de base ainsi obtenue une laque de finition transparente non aqueuse et
(4) on soumet ensuite à cuisson conjointement la couche de laque de base et la couche de laque de finition,
caractérisé en ce que la laque de finition transparente, non aqueuse, appliquée dans l'étape (3) est une laque conformément à l'une quelconque des revendications 2 à 5.

7. Procédé selon la revendication 6, caractérisé en ce que la teneur en matières solides de la laque de finition transparente appliquée dans l'étape (3) est d'au moins 50 % en poids.
